# EUROPEAN PATENT SPECIFICATION

(11) **EP 4 144 638 B1**
(45) Date of publication and mention of the grant of the patent: **29.05.2024**
(21) Application number: 21194871.6
(22) Date of filing: 03.09.2021
(51) Int. Cl.: B64C 25/38, B64C 25/66

(54) **AIRCRAFT LANDING GEAR ASSEMBLY**
FLUGZEUGFAHRWERKSBAUGRUPPE
ENSEMBLE TRAIN D'ATTERRISSAGE D'AÉRONEF

(43) Date of publication of application: 08.03.2023
(73) Proprietor: Safran Landing Systems UK Ltd, Gloucester, Gloucestershire GL2 9QH (GB)
(72) Inventor: BENNETT, Ian, Cheltenham, GL51 6AF (GB)
(74) Representative: Wardle, Callum Tarn

(56) References cited:
- WO-A1-2008/034296
- FR-A5- 2 164 021
- GB-A- 699 423
- US-A- 2 281 351
- US-A- 2 416 183
- US-A- 2 433 830
- US-A- 2 867 480
- US-A- 3 261 418

## Description

### Field of the Invention

The invention relates to an aircraft landing gear assembly including a caterpillar track assembly.

### Backaround

Fixed wing aircraft, such as for example commercial passenger aircraft, typically have wheeled landing gear to support the aircraft on the ground. Airport operators will also typically place limits on the maximum ground load each aircraft wheel may exert on the runway, in order to avoid damage to the runway. Consequently, to avoid such damage to runways, or to avoid the aircraft sinking into soft ground, it is helpful to use low pressure tyres to spread the load of the aircraft. However, there is a limit to the size of tyres, or number of wheels per landing gear, that may be used, those limits concerning considerations such as retracted landing gear bay space within the aircraft, aerodynamic drag caused by landing gear bay 'blisters', overall weight of the landing gear and so on.

Previous attempts to address this issue have included the use of caterpillar tracks on landing gear and experiments with air cushions beneath the aircraft (usually a large area of the underside of the fuselage enclosed by an air cushion). However, both possible solutions have their own associated disadvantages. Air cushion arrangements on their own suffer from a lack of directional control, a lack of braking, and limited effectiveness when clear of the ground, if used as a landing gear. Caterpillar track arrangements suffer from the track needing to have some stiffness, and therefore undesirable weight, to be able to spread load between supporting rollers, which means a) there is more inertia in the track, thus increasing spin-up loads, b) if a track breaks there is more flailing mass, increasing the risk of secondary damage, and c) the stiffer track needs a larger radius, and therefore bigger rollers, increasing the height of the caterpillar unit. Further disadvantages of caterpillar track arrangements include increased inertia and spin-up loads arising from the need for multiple rollers to spreading the aircraft weight across the caterpillar track, plus the presence of the required multiple sprung load-bearing rollers and return rollers adds to the height of the caterpillar assembly.

US2433830A describes an endless track landing element and means for mounting the same on aircraft. US3261418A describes an air cushion track arrangement for a land vehicle.

There therefore remains a desire for an aircraft landing gear assembly that at least mitigates some of the above-mentioned disadvantages.

### Summary

According to a first aspect of the invention there is provided an aircraft landing gear assembly comprising: a sliding tube; a support beam pivotally connected to the sliding tube; at least one caterpillar track assembly including: a pair of track end wheels pivotally mounted to the support beam; a caterpillar track extending between and around the pair of track end wheels; and a first air cushion device located between the track end wheels and arranged to provide an air cushion adjacent to a portion of an inner surface of the load bearing section of the caterpillar track section, wherein the caterpillar track assembly further comprises a second air cushion device located between the track end wheels and arranged to provide an air cushion adjacent to a portion of the inner surface of the non-load bearing/return section of the caterpillar track assembly.

The bottom of the air cushion device may be positioned lower than the track end wheels. Additionally or alternatively, at least one of the track end wheels may be are mounted to the support beam by an associated suspension unit.

At least one of the track end wheels may be arranged to be braked.

Each air cushion device may include an airbox mounted to the support beam and having an air inlet configured to be communicable with a pressurised air supply and one or more air outlets, and an air skirt mounted to the periphery of the airbox, the air skirt and airbox defining a plenum chamber, such that the air cushion forms between the plenum chamber and the adjacent track section. The air skirt may be an inflatable skirt.

The landing gear assembly may further comprise a pair of said caterpillar track assemblies mounted on opposite sides of the sliding tube.

The aircraft landing gear assembly may further comprise at least one wheel and tyre assembly pivotally mounted to the support beam.

The caterpillar track preferably inhibits the passage of air through it, and may comprises an elastomeric or woven material, such as natural or synthetic rubber.

According to a further aspect of the present invention there is provided an aircraft having at least one landing gear assembly in accordance with any preceding claim.

### Brief Description of the Drawings

Embodiments of the invention will now be described with reference to the accompanying drawings, in which:
Figure 1A schematically illustrates an aircraft landing gear having a caterpillar track and an air cushion, not falling within the scope of the claims;
Figure 1B illustrates an alternative arrangement of the aircraft landing gear shown in Figure 1A, not falling within the scope of the claims;
Figure 2 schematically illustrates an aircraft landing gear having a caterpillar track and first and second air cushions;
Figure 3 schematically illustrates a cross section of the aircraft landing gear of Figure 1A or Figure 1B with a first skirt arrangement;
Figure 4 schematically illustrates a cross section of the aircraft landing gear of Figure 1A or Figure 1B with a second skirt arrangement;
Figure 5 schematically illustrates an aircraft landing gear having a pair of caterpillar track assemblies, not falling within the scope of the claims;
Figure 6 schematically illustrates in partial side cross section an aircraft landing gear having a caterpillar track and air cushion in combination with ground wheels, not falling within the scope of the claims; and
Figure 7 schematically illustrates in partial front cross section the aircraft landing gear of Figure 6.

### Detailed Description

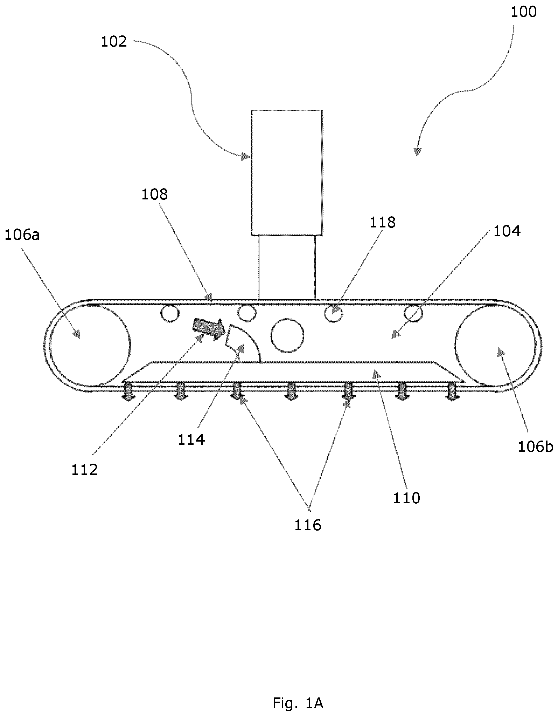

In Figure 1A an aircraft landing gear assembly is shown generally at 100. The landing gear assembly includes a main shock absorbing strut 102 arranged at a first end to be attached to an aircraft fuselage or wing structure (not shown) and pivotally connected at the second end to a support beam 104. A pair of track end wheels 106a, 106b are mounted at respective ends of the support beam 104 such that the track end wheels are rotatable. A continuous caterpillar track 108 extends between and around the track end wheels. A first air cushion device 110 is located between the track end wheels and is arranged is to receive a supply of pressurised air, indicated by arrow 112, via an air inlet 114 and to expel the pressurised air in close proximity to the inner surface of the ground contacting, or load bearing, section of the caterpillar track 108, as indicated by the plurality of arrows 116, thereby creating an air cushion adjacent to the inner surface of the load bearing section of the caterpillar track. To allow the formation of the air cushion the caterpillar track 108 should exhibit at least some resistance to the passage of the pressurised air through the track. For example, the track 108 may be made from a material with low or negligible porosity to air, such as rubber (or other suitable elastomer) or a woven material, to avoid or minimise air from the air cushion leaking through the track 108.

In operation, the air cushion generated by the air cushion device 110 supports the lower, ground contacting, portion of the caterpillar track. As a result, the caterpillar track assembly (comprising the track end wheels and caterpillar track) does not require any ground support wheels, which are required for conventional caterpillar track assemblies to transfer the weight of the vehicle to the lower length of the caterpillar track, such that the landing gear may weigh less than previous tracked landing gear. Additionally, the lower portion of the caterpillar track assists in maintaining the air cushion, or at least a central portion of the air cushion, prior to touchdown of the aircraft or if encountering bumps or uneven ground. This is an improvement over other air cushion arrangements where, as noted previously, the air cushion has limited effectiveness when clear of the ground.

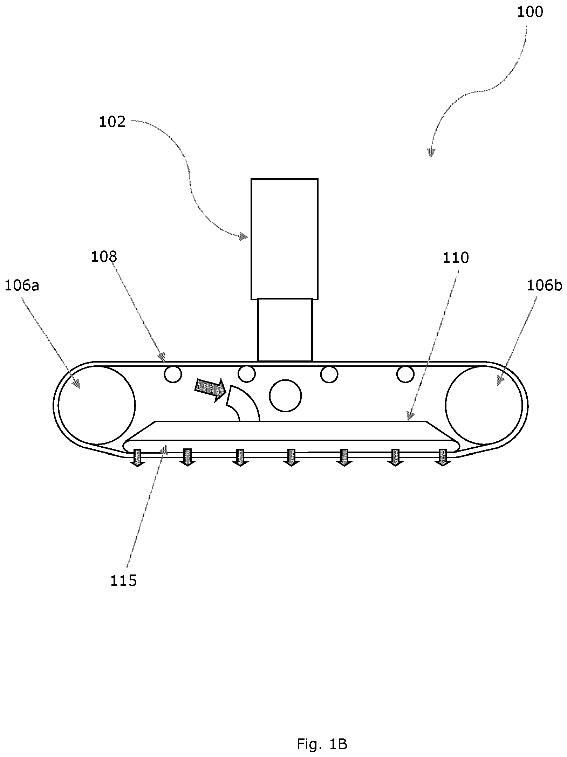

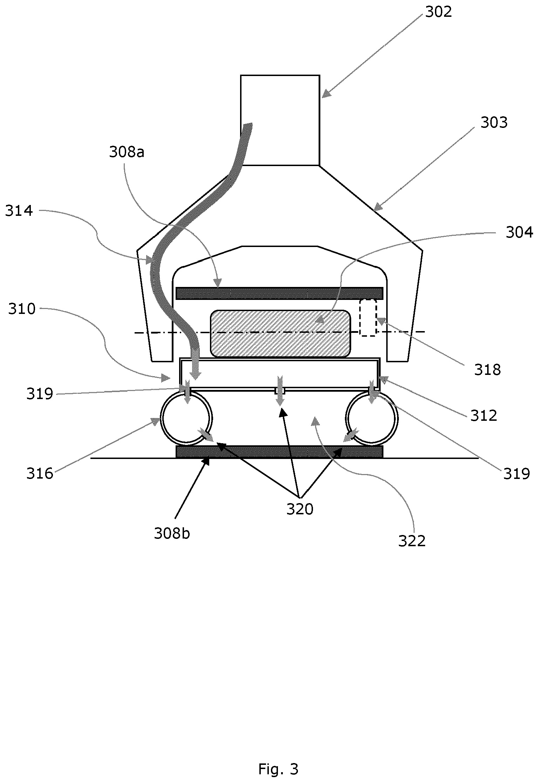

Figure 1B schematically illustrates a variant of the arrangement shown in Figure 1A. The same elements shown in Figure 1A have the same reference numerals in Figure 1B. In the arrangement shown in Figure 1B the track end wheels 106a and 106b and the air cushion device 110 are positioned relative to each other in such a manner that the bottom of the air cushion device is positioned lower than the track end wheels (or at least the forward track end wheel 106a). This is to enable the landing gear assembly to easily negotiate minor bumps and dips in the ground surface, for example during taxiing of the aircraft, that would in conventional landing gear be accommodated by deflection of the tyres. Additionally or alternatively, one or both track end wheels 106 may be mounted to the support beam 104 by respective suspension units (not shown) to allow some vertical movement of the track end wheels. Whether or not such suspension units are included, the air cushion will support a proportion of the aircraft weight on the ground. Larger variations in the ground surface, and movement during landing and take-off, can be accommodated by pivoting of the support (bogie) beam 104 and/or the shock absorber 102. A pitch trimmer (not shown) may also be coupled between the support beam and shock absorber strut in a conventional manner. In the arrangement shown in Figure 1B the air cushion device 110 also includes a side skirt 115 which also accommodates small variations in the ground surface and functions to facilitate the formation and retention of the generated air cushion. Further details of the side skirt 115 are discussed below in relation to Figure 3.

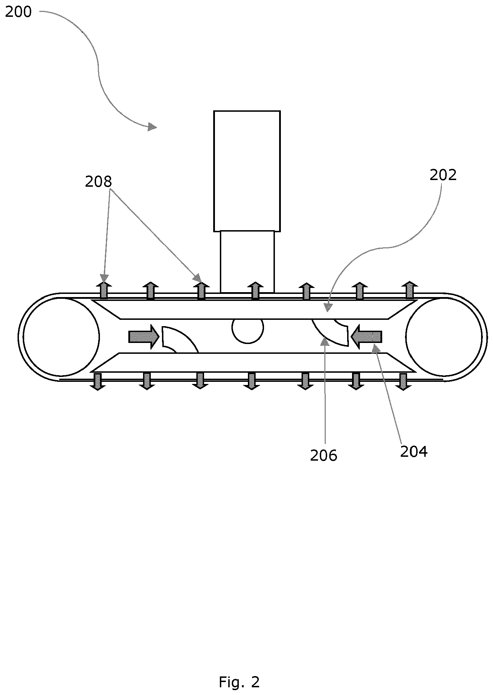

The landing gear assembly shown in Figures 1A & 1B include a number of return rollers 118 provided to support the upper, or return, section of the caterpillar track. Figure 2 illustrates a landing gear assembly 200 in which a second air cushion device 202 is provided in place of return rollers to support the return section of the caterpillar track. Preferably, the second air cushion device 202 is of substantially the same arrangement and construction as the first air cushion device 110, that is it is located between the track end wheels and is arranged is to receive a supply of pressurised air, indicated by arrow 204, via an air inlet 206 and to expel the pressurised air in close proximity to the inner surface of the upper section of the caterpillar track 108, as indicated by the plurality of arrows 208, thereby creating an air cushion adjacent to the inner surface of the return section of the caterpillar track. In another variant, the first and second air cushion devices may share a common air inlet (with separate branches to the separate air cushion devices) receiving a single supply of pressurised air.

Figure 3 schematically illustrates a cross-sectional view of the landing gears shown in Figure 1A and Figure 1B, with one possible configuration of the air cushion device. In Figure 3 only the lower portion of the main strut 102, typically referred to as the sliding tube 302, is illustrated. The sliding tube 302 terminates as, or is connected to, a forked yoke 303 which is pivotally connected to the support beam 304. Any suitable mechanism for connecting the yoke 303 to the support beam 304 may be utilised, such as a pivot pin. In Figure 3 only the pivot axis, indicated by the chained line, is illustrated for the purposes of clarity. The upper, return, section 308a and lower, ground contacting, section 308b of the caterpillar track 308 are illustrated, with the lower section 308b being illustrated in contact with the ground and the upper section 308a passing between the two sides of the yoke 303. As mentioned with reference to Figure 1A and Figure 1B, one or more return rollers may be included, with a single return roller 318 being illustrated in broken outline in Figure 3 to illustrate a possible configuration. The return rollers will be rotatably mounted to the support beam 304 in any convenient manner and location.

Still referring to Figure 3, mounted to the underside of the support beam 304 is an air cushion device 310. The air cushion device comprises an airbox 312 mounted to the underside of the support beam, the airbox being connected to a supply of pressurised air 314. The airbox preferably extends substantially the full length of the distance between the track end wheels (not shown in Figure 3). Extending around, and fastened to, the periphery of the underside of the airbox 312 is an inflatable skirt 316. A plurality of air passageways 319 are provided between the interior of the airbox 314 and the interior of the inflatable skirt 316 such that in operation the skirt is inflated by the pressurised air fed into the airbox. One or more air outlets 320 feed pressurised air into the central chamber 322, or plenum, formed by the underside of the airbox 312, the inflatable skirt 316 and the inner surface of the lower section 308b of the caterpillar track. The air fed into the plenum 322 forms the air cushion that, as discussed, supports the lower section of the caterpillar track and preferably a portion of the weight of the aircraft. As will be appreciated, in operation a small gap will be present between the inflatable skirt 316 and the lower section 308b of the caterpillar track (caused by the high-pressure air within the plenum seeking to escape to the ambient pressure outside the skirt) which allows the caterpillar track to move relative to the inflatable skirt with minimal friction. In Figure 3 air outlets 320 are shown in both the inner sides of the inflatable skirt 316 and the underside of the airbox 312. In other variants the air outlets 320 may be formed in either only the inflatable skirt 316 or only in the airbox 312. The air outlets may also be formed either as discrete openings or by virtue of sections of air porous material.

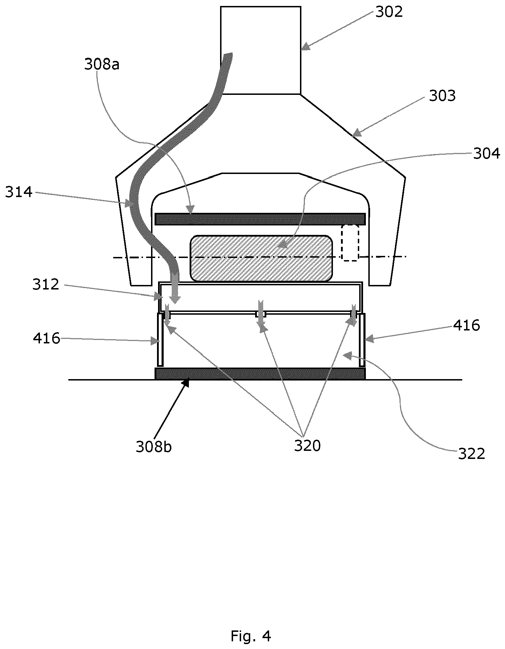

Figure 4 shows the landing gear of Figure 3 with an alternative skirt arrangement of the air cushion device. The only difference in the landing gear shown in Figure 4 over that of Figure 3 is that rather than the air cushion device 310 having an inflatable side skirt 316, the air cushion device of the landing gear of Figure 4 has simple vertical side skirt 416 which is substantially air impervious. The airbox 312 has one or more air outlets 320 feeding pressurised air into the plenum 322. It will also be appreciated that any other design of side skirt may be used for the air cushion device having an analogous design to hovercraft side skirts, such as multiple inflatable bags.

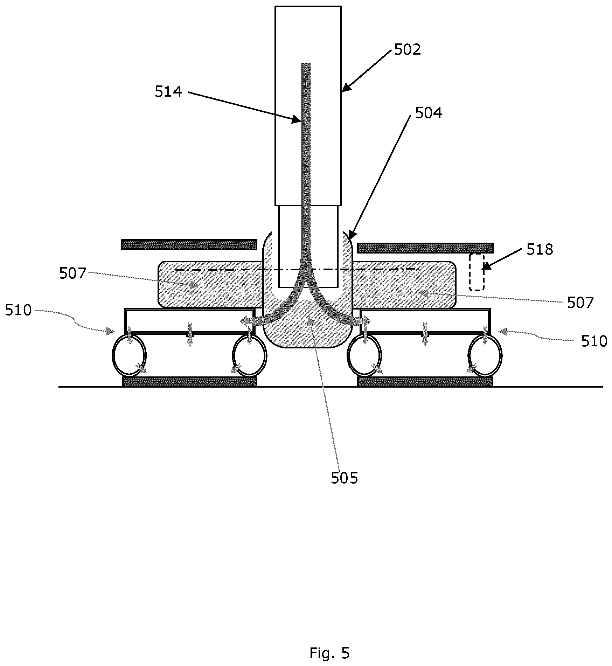

Figure 5 shows a further alternative arrangement of the aircraft landing gear assemblies shown in the previous Figures. In the arrangement shown in Figure 5 a pair of caterpillar track assemblies and respective air cushion devices are provided in a side-by-side arrangement. Figure 5 illustrates a cross-section through a central portion of the landing gear assembly, as viewed head on. The support beam 504 is pivotally connected to the bottom of the sliding tube 502. In Figure 5 the sliding tube is illustrated as being connected to a central portion 505 of the support beam within a recess formed in the support beam. However, the sliding tube 502 may be pivotally connected to the central portion 505 of the support beam with a forked yoke, although in that instance the yoke will be positioned between the pair of caterpillar track assemblies. The support beam 504 includes at least two opposing side portions 507 extending in opposite directions from the central portion 505. Each side portion 507 of the support beam has a respective air cushion device 510 and pair of track end wheels (not shown) mounted to it. Each air cushion device 510 is connected to a pressurised air supply 514. Each air cushion device 510 may be of the same configuration as those shown, and discussed in relation to, Figures 3 and 4. As previously discussed, each caterpillar track assembly may include one or more return rollers 518. The support beam may be of any shape or configuration provided that it functions to provide adequate support to each air cushion device and caterpillar track assembly and provides a pivotal connection to the sliding tube. The benefit of providing multiple caterpillar track assemblies and associated air cushion devices on a single landing gear assembly is that the landing gear assembly is able to support a greater weight. This may be advantageous for larger and/or heavier aircraft.

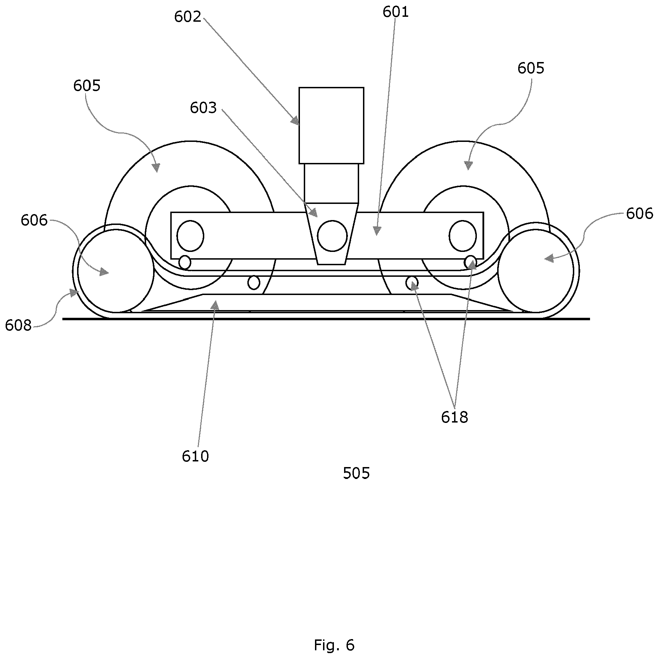

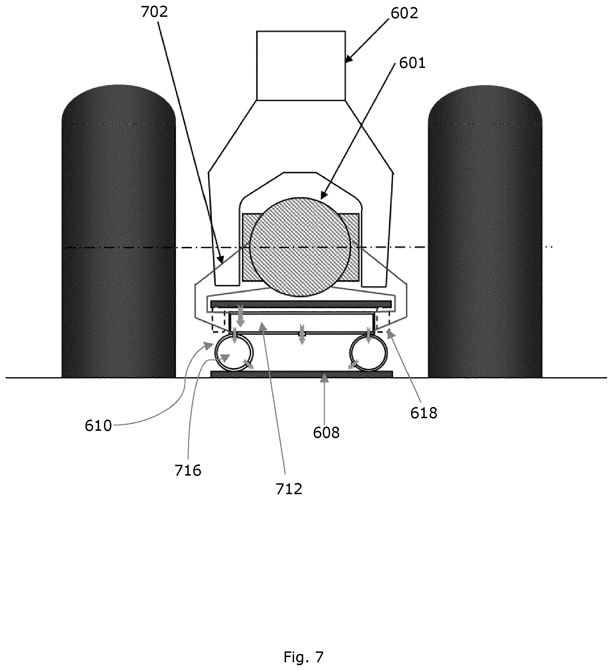

Figure 6 schematically illustrates a further landing gear assembly in which the caterpillar assembly and air cushion device arrangement previously discussed is provided in combination with conventional wheels and tyres. In Figure 6 a shock absorber strut 602 is pivotally connected to a bogie beam 601 by means of a forked yoke 603. First and second pairs of wheel assemblies 605 are mounted on respective opposite ends of the bogie beam by corresponding axles. In Figure 6 only one of each pair of wheel assemblies is illustrated for the purposes of clarity. Mounted to the bogie beam 601 (as will be discussed in more detail in respect to Figure 7 below) is a caterpillar track assembly (including track end wheels 606 and caterpillar track 608) and an air cushion device 610. One or more return rollers 618 may also be provided.

Figure 7 schematically illustrates an end view in partial cross section of the landing gear assembly of Figure 6. It should be noted that the wheels and implied axles (not shown), are at different sections to the bogie beam pivot. As with the previously discussed arrangements, the landing gear assembly includes a caterpillar track 608 extending between and around the pair of track end wheels 606 (not visible in Figure 7) and an air cushion device 610 located between the track end wheels. Return rollers 618 may optionally also be included. In Figure 7 the air cushion device 610 is shown as including an airbox 712 and inflatable side skirts 716 as discussed in relation to Figure 3, however any other configuration of air cushion device as previously discussed may alternatively be provided. The air cushion device 610 is mounted to the bogie beam 601 by a connecting member 702. The connecting member 702 also provides a mounting for the track end wheels 606, and where applicable the return rollers 618. The connecting member 702 may be a single element connected to the bogie beam 601 fore and aft of the forked yoke 603 (or equivalent bogie pivot arrangement) and shaped to pass below or to either side of the yoke 603 (to permit pivoting of the bogie beam) or maybe two or more separate elements. Consequently, either the connecting member, the bogie beam, or the combination of connecting member and bogie beam may be considered equivalent to the support beam discussed above in relation to the other arrangements.

The supply of pressurised air for the various examples of landing gear assemblies discussed above may be derived from any convenient source of pressurised air. For example, one or more electrically or hydraulically driven compressor fans may be mounted on, or in the proximity of, the landing gear assemblies. Alternatively, a central pressurised air source located elsewhere on the aircraft to which the landing gear is mounted may be used, such as bleed air from one or more of the aircraft engines or auxiliary power unit (APU), or a separate compressor driven mechanically or electrically from the engines or APU.

In some or all embodiments the track end wheels may additionally be braked, i.e. a brake assembly may be provided, such as a conventional brake disc pack, to allow a braking force to be applied to a respective track end wheel. Other braking assemblies or arrangements to provide a braking force to the track end wheels may be provided as is appropriate to the particular embodiment.

## Claims

1. An aircraft landing gear assembly comprising:
a sliding tube (102);
a support beam (104) pivotally connected to the sliding tube;
at least one caterpillar track assembly including:
a pair of track end wheels (106) pivotally mounted to the support beam;
a caterpillar track (108) extending between and around the pair of track end wheels; and
**characterized in that** the at least one caterpillar track assembly further includes a first air cushion device (110) located between the track end wheels
and arranged to provide an air cushion adjacent to a portion of an inner surface of the load bearing section of the caterpillar track section,
wherein the caterpillar track assembly further comprises a second air cushion device (202) located between the track end wheels (106) and arranged to provide an air cushion adjacent to a portion of the inner surface of the non-load bearing/return section of the caterpillar track assembly.

2. An aircraft landing gear assembly according to claim 1, wherein the bottom of the first air cushion device (110) is positioned lower than the track end wheels (106).

3. An aircraft landing gear assembly according to any preceding claim, wherein at least one of the track end wheels (106) are mounted to the support beam (104) by an associated suspension unit.

4. An aircraft landing gear assembly according to any preceding claim wherein at least one of the track end wheels (106) is arranged to be braked.

5. An aircraft landing gear assembly according to any preceding claim wherein each air cushion device includes:
an airbox (312) mounted to the support beam (104) and having an air inlet configured to be communicable with a pressurised air supply (314) and one or more air outlets (320); and
an air skirt (316) mounted to the periphery of the airbox, the air skirt and airbox defining a plenum chamber (322), such that the air cushion forms between the plenum chamber and the adjacent track section.

6. An aircraft landing gear assembly according to claim 5, wherein the air skirt (316) is an inflatable skirt.

7. An aircraft landing gear assembly according to any preceding claim further comprising a pair of said caterpillar track assemblies mounted on opposite sides of the sliding tube (102).

8. An aircraft landing gear assembly according to any preceding claim, further comprising at least one wheel and tyre assembly (605) pivotally mounted to the support beam (102).

9. An aircraft landing gear assembly according to any preceding claim, wherein the caterpillar track (108) inhibits the passage of air through it.

10. An aircraft landing gear assembly according to claim 9, wherein the caterpillar track (108) comprises an elastomeric or woven material.

11. An aircraft having at least one landing gear assembly in accordance with any preceding claim.

## Patentansprüche

1. Flugzeugfahrwerksanordnung, die aufweist:
ein Gleitrohr (102);
einen Stützbalken (104), der schwenkbar mit dem Gleitrohr verbunden ist;
mindestens eine Raupenkettenanordnung, die aufweist:
ein Paar von Kettenendrädern (106), die schwenkbar an dem Stützbalken montiert sind;
eine Raupenkette (108), die sich zwischen dem und um das Paar von Kettenendrädern erstreckt; und
**dadurch gekennzeichnet, dass** die mindestens eine Raupenkettenanordnung ferner eine erste Luftkissenvorrichtung (110) aufweist, die sich zwischen den Kettenendrädern befindet und angeordnet ist, um ein Luftkissen angrenzend an einen Teil einer Innenfläche des tragenden Abschnitts des Raupenkettenabschnitts bereitzustellen,
wobei die Raupenkettenanordnung ferner eine zweite Luftkissenvorrichtung (202) aufweist, die sich zwischen den Kettenendrädern (106) befindet und angeordnet ist, und ein Luftkissen angrenzend an einen Teil der Innenfläche des nicht tragenden Abschnitts/Rücklaufabschnitts der Raupenkettenanordnung bereitzustellen.

2. Flugzeugfahrwerksanordnung nach Anspruch 1, wobei das Unterteil der ersten Luftkissenvorrichtung (110) tiefer als die Kettenendräder (106) positioniert ist.

3. Flugzeugfahrwerksanordnung nach einem der vorstehenden Ansprüche, wobei mindestens eines der Kettenendräder (106) über eine zugehörige Aufhängungseinheit an dem Stützbalken (104) montiert ist.

4. Flugzeugfahrwerksanordnung nach einem der vorstehenden Ansprüche, wobei mindestens eines der Kettenendräder (106) zum Bremsen angeordnet ist.

5. Flugzeugfahrwerksanordnung nach einem der vorstehenden Ansprüche, wobei jede Luftkissenvorrichtung aufweist:
einen Luftkasten (312), der an dem Stützbalken (104) montiert ist und einen Lufteinlass, der dazu ausgebildet ist, mit einer Druckluftzufuhr (314) verbindbar zu sein, und einen oder mehrere Luftauslässe (320) aufweist; und
eine Luftschürze (316), die an der Peripherie des Luftkastens montiert ist, wobei die Luftschürze und der Luftkasten eine Plenumskammer (322) definieren, so dass sich das Luftkissen zwischen der Plenumskammer und dem angrenzenden Kettenabschnitt bildet.

6. Flugzeugfahrwerksanordnung nach Anspruch 5, wobei die Luftschürze (316) eine aufblasbare Schürze ist.

7. Flugzeugfahrwerksanordnung nach einem der vorstehenden Ansprüche, die ferner ein Paar von Raupenkettenanordnungen aufweist, die auf entgegengesetzten Seiten des Gleitrohrs (102) montiert sind.

8. Flugzeugfahrwerksanordnung nach einem der vorstehenden Ansprüche, die ferner mindestens eine Rad- und Reifenanordnung (605) aufweist, die schwenkbar an dem Stützbalken (102) montiert ist.

9. Flugzeugfahrwerksanordnung nach einem der vorstehenden Ansprüche, wobei die Raupenkette (108) verhindert, dass Luft dort hindurch strömt.

10. Flugzeugfahrwerksanordnung nach Anspruch 9, wobei die Raupenkette (108) ein Elastomermaterial oder ein Gewebematerial aufweist.

11. Flugzeug, das mindestens eine Flugzeugfahrwerksanordnung nach einem der vorstehenden Ansprüche aufweist.

## Revendications

1. Ensemble train d'atterrissage d'aéronef comprenant :
un tube coulissant (102) ;
une poutre de support (104) raccordée, de manière pivotante, au tube coulissant ;
au moins un ensemble de chenille comprenant :
une paire de roues d'extrémité à chenille (106) montée de manière pivotante sur la poutre de support ;
une chenille (108) s'étendant entre et autour de la paire de roues d'extrémité à chenille ; et
**caractérisé en ce que** le au moins un ensemble de chenille comprend en outre un premier dispositif de coussin d'air (110) positionné entre les roues d'extrémité à chenille et agencé pour fournir un coussin d'air adjacent à une partie d'une surface interne de la section de support de charge de la section de chenille,
dans lequel l'ensemble de chenille comprend en outre un second dispositif de coussin d'air (202) positionné entre les roues d'extrémité à chenille (106) et agencé pour fournir un coussin d'air adjacent à une partie de la surface interne de la section non porteuse/de retour de l'ensemble de chenille.

2. Ensemble train d'atterrissage d'aéronef selon la revendication 1, dans lequel le fond du premier dispositif de coussin d'air (110) est positionné plus bas que les roues d'extrémité à chenille (106).

3. Ensemble train d'atterrissage d'aéronef selon l'une quelconque des revendications précédentes, dans lequel au moins l'une des roues d'extrémité à chenille (106) est montée sur la poutre de support (104) grâce à une unité de suspension associée.

4. Ensemble train d'atterrissage d'aéronef selon l'une quelconque des revendications précédentes, dans lequel au moins l'une des roues d'extrémité à chenille (106) est agencée pour être freinée.

5. Ensemble train d'atterrissage d'aéronef selon l'une quelconque des revendications précédentes, dans lequel chaque dispositif de coussin d'air comprend :
une boîte à vent (312) montée sur la poutre de support (104) et ayant une entrée d'air configurée pour pouvoir communiquer avec une alimentation en air sous pression (314) et une ou plusieurs sorties d'air (320) ; et
une jupe d'air (316) montée sur la périphérie de la boîte à vent, la jupe d'air et la boîte à vent définissant une chambre de plénum (322), de sorte que le coussin d'air se forme entre la chambre de plénum et la section de chenille adjacente.

6. Ensemble train d'atterrissage d'aéronef selon la revendication 5, dans lequel la jupe d'air (316) est une jupe gonflable.

7. Ensemble train d'atterrissage d'aéronef selon l'une quelconque des revendications précédentes, comprenant en outre une paire desdits ensembles de chenille montée sur les côtés opposés du tube coulissant (102) .

8. Ensemble train d'atterrissage d'aéronef selon l'une quelconque des revendications précédentes, comprenant en outre au moins un ensemble de roue et de pneu (605) monté de manière pivotante sur la poutre de support (102).

9. Ensemble train d'atterrissage d'aéronef selon l'une quelconque des revendications précédentes, dans lequel la chenille (108) empêche le passage de l'air à travers cette dernière.

10. Ensemble train d'atterrissage d'aéronef selon la revendication 9, dans lequel la chenille (108) comprend un matériau élastomère ou tissé.

11. Aéronef ayant au moins un ensemble train d'atterrissage selon l'une quelconque des revendications précédentes.
